# EUROPÄISCHE PATENTSCHRIFT

(11) **EP 1 777 135 B1**
(45) Veröffentlichungstag und Bekanntmachung des Hinweises auf die Patenterteilung: **06.01.2010**
(21) Anmeldenummer: 06020358.5
(22) Anmeldetag: 28.09.2006
(51) Int. Cl.: B60W 30/10

(54) **Verfahren und Vorrichtung zur Anpassung von Fahrparametern von Fahrzeugen**
Procedure and device for the adjustment of vehicles parameters.
Procédé et dispositif d'adaptation des paramètres de véhicules

(30) Priorität: 21.10.2005 DE 102005050540
(43) Veröffentlichungstag der Anmeldung: 25.04.2007
(73) Patentinhaber: MAN Nutzfahrzeuge Aktiengesellschaft, 80976 München (DE)
(72) Erfinder: Kock, Peter, 85646 Anzing (DE)

(56) Entgegenhaltungen:
- EP-A2- 1 424 261
- WO-A-03/006288
- WO-A-03/055734
- WO-A2-02/21156
- DE-A1- 10 248 840
- US-A- 5 684 696

## Beschreibung

Die vorliegende Erfindung bezieht sich auf ein Verfahren und eine Vorrichtung zur Anpassung von Fahrparametern von Fahrzeugen.

Das Verfahren und die Vorrichtung werden unter Bezugnahme auf Lastkraftwagen beschrieben, es wird jedoch darauf hingewiesen, dass die Erfindung auch bei anderen Straße-, und Schienenfahrzeugen Anwendung finden kann. Aus dem Stand der Technik sind Vorrichtungen und Verfahren bekannt, die Fahrparameter, wie beispielsweise die Geschwindigkeit steuern. Dabei kann von einem Benutzer eine Soll-Geschwindigkeit eingegeben werden, und eine geeignete Fahrzeugelektronik hält diese Geschwindigkeit, wobei sie bewirkt, dass das Fahrzeug, beispielsweise bei Auftreten von Steigungen die Motorleistung erhöht und bei Abwärtsfahrten die Motorleistung drosselt bzw. eine Bremswirkung über das Getriebe eingeleitet wird.

Dabei werden bei den aus dem Stand der Technik bekannten Verfahren Sollwerte vorgegeben und diese in Abhängigkeit von gegenwärtigen Ist - Zuständen erreicht.

In vielen Anwendungsbereichen ist es jedoch wünschenswert, auch ökonomische Aspekte, wie etwa den der Treibstoffeinsparung, bei der Anpassung an Sollwerte zu berücksichtigen. Daneben ist es oft auch wünschenswert, Begrenzungen von Fahrparametern, wie beispielsweise gesetzliche Tempolimits zu berücksichtigen.

So wird beispielsweise ein geübter Fahrer beim Heranfahren an eine Bergkuppe bereits vorab miteinkalkulieren, dass er die Bergkuppe in einer bestimmen Zeit überwunden haben wird und danach das Fahrzeug durch die Hangabtriebskraft wieder von alleine beschleunigt wird. In diesem Fall kann der Fahrer zur Energieeinsparung bereits vor Erreichen der Bergkuppe die Motorleistung reduzieren, um insgesamt Energie einzusparen.

Aus der DE 102 48 840 A1, die als nächstliegende Stand der Technick nach der Oberbegriff des Anspruchs 1 zu sehen ist, sind ferner ein Verfahren und eine Einrichtung zur automatischen Haltestellenanfahrt mit einem Kraftfahrzeug bekannt. Hierbei wird in Abhängigkeit vom Abstand des Fahrzeuges zu einer Haltestelle eine Trajektorien-Fahrgeschwindigkeit bestimmt.

Diese Erfindung ist jedoch bevorzugt für den Einsatz im öffentlichen Personennahverkehr geeignet und nicht zur Anwendung im Güterfernverkehr.

Demzufolge liegt der vorliegenden Erfindung die Aufgabe zugrunde, ein Verfahren und eine Vorrichtung zur Anpassung von Fahrparametern zur Verfügung zu stellen, welches bei der Regulierung der Fahrparameter auch ökonomische Aspekte berücksichtigt.

Dies wird erfindungsgemäß durch ein Verfahren nach Anspruch 1 und eine Vorrichtung nach Anspruch 13 gelöst. Vorteilhafte Ausgestaltungen und Weiterbildungen sind Gegenstand der Unteransprüche.

Bei dem erfindungsgemäßen Verfahren zur Anpassung von Fahrparametern werden in einem ersten Verfahrensschritt die Positionsdaten des Fahrzeuges zu einem ersten vorgegebenen Zeitpunkt ermittelt. Anschließend werden zukünftige Positionsdaten des Fahrzeuges in einem bezüglich des ersten vorgegebenen Zeitpunktes zukünftigen Zeitraum ermittelt. In einem weiteren Verfahrensschritt wird wenigstens ein Fahrparameter unter Zugrundelegung der für den zukünftigen Zeitraum ermittelten Positionsdaten angepasst.

Unter Positionsdaten werden die geographischen Positionsdaten des Fahrzeuges verstanden, beispielsweise der Punkt, auf dem sich dieses Fahrzeug auf einer virtuellen Landkarte befindet. Zusätzlich werden unter Positionsdaten auch Höhendaten, Daten über die Steigung an einer gewissen geographischen Position und dergleichen verstanden.

Unter Fahrparametern werden alle Parameter des Fahrzeuges verstanden, die dessen Fortbewegung beeinflussen können, wie beispielsweise die Geschwindigkeit, der eingelegte Gang, eine etwaige Bremsleistung und dergleichen.

Durch die Berücksichtigung zukünftiger Positionsdaten kann der Fahrparameter in energiesparender Weise angepasst werden. So kann beispielsweise auf eine starke Beschleunigung des Fahrzeuges verzichtet werden, wenn das Fahrzeug aufgrund einer Kurve in Kürze wieder verzögert werden müsste.

Bevorzugt werden die zukünftigen Positionsdaten des Fahrzeugs aus solchen Positionsdaten gewonnen, die vor dem ersten Zeitpunkt ermittelt wurden. Dies bedeutet, dass laufend die Positionsdaten des Fahrzeugs ermittelt werden. Aus der Ist-Position des Fahrzeuges und den Positionen der Vergangenheit kann auf die Fahrtrichtung geschlossen und damit die in der nahen Zukunft liegende Fahrtstrecke ermittelt werden.

Bevorzugt werden die Positionsdaten jeweils nach im Wesentlichen konstanten Zeitintervallen ermittelt. Diese Zeitintervalle liegen vorzugsweise zwischen 0,01 Sekunden und 20 Sekunden, bevorzugt zwischen 0,2 Sekunden und 4 Sekunden und besonders bevorzugt im Bereich von 1 Sekunde. Die Größe der Zeitintervalle hängt auch von den zur Verfügung stellbaren Prozessorgeschwindigkeiten, der durchschnittlichen Fahrtgeschwindigkeit des Fahrzeuges und dergleichen ab.

Vorzugsweise werden in einem weiteren Verfahrensschritt zukünftige Positionsdaten in einem weiteren zukünftigen Zeitraum ermittelt. Dieser weitere zukünftige Zeitraum ist besonders bevorzugt zeitlich von dem erstgenannten Zeitraum um ein Zeitintervall versetzt. Vorzugsweise wird der Zeitraum mit den Zeitintervallen verschoben und die obengenannten Verfahrensschritte werden entsprechend wiederholt.

Bevorzugt ist die Größe des zukünftigen Zeitraums im Wesentlichen konstant. Es ist jedoch auch möglich, die Größe des zukünftigen Zeitraums an bessere Vorgaben, wie die die Fahrtgeschwindigkeit, oder die Art der Strecke anzupassen. So könnten in einem besonders kurvenreichen Streckengebiet kürzere Zeiträume gewählt werden, um im Rahmen von Mittelungen geringere Abweichungen bzw. Fehler zu erhalten.

Dabei setzt sich der zukünftige Zeitraum bevorzugt aus einer Summe einer vorgegebenen Vielzahl von Zeitintervallen zusammen. Dies bedeutet, dass der in der Zukunft liegende Zeitraum in eine Vielzahl von Intervallen aufgeteilt wird, wobei die einzelnen Zeitintervalle den Intervallen entsprechen, in denen die Positionsdaten jeweils aufgenommen werden.

Bevorzugt werden die Positionsdaten des Fahrzeuges mit Hilfe von Satellitenpositionssignalen ermittelt. Dabei werden bevorzugt Signale des Global Postionning Systems (GPS) empfangen. Besonders bevorzugt können auch die Signale zukünftiger Satellitennavigationssysteme, wie insbesondere des europäischen Systems Galileo, empfangen werden. Zusätzlich können auch Verfahren, wie das differenzielle GPS (DGPS) verwendet werden, womit für zivile GPS-Empfänger Empfangsgenauigkeiten von unter einem Meter erreicht werden können.

Vorzugweise wird aus den ermittelten Positionsdaten eine Trajektorie des Fahrzeuges in dem zukünftigen Zeitraum ermittelt. Diese Trajektorie bzw. das Trajektorienprofil erlaubt Aussagen über die unmittelbar vor dem Fahrzeug liegende Fahrstrecke, wie beispielsweise die Radien der folgenden Kurven, die Höhenunterschiede, und damit die Steigungen bzw. das Gefälle. Damit werden bevorzugt die Eigenschaften aus den Trajektorien bestimmt Diese Informationen werden für die Anpassung des Fahrparameters herangezogen.

Vorzugweise stehen diese Informationen für die eine zukünftige Fahrstrecke zwischen 100 und 1000 m und bevorzugt zwischen 200 und 800 m und besonders bevorzugt zwischen 300 und 700 m zur Verfügung. Die Länge dieser Strecke kann vorgegebenen Fahrtbedingungen, wie der Geschwindigkeit des Fahrzeuges angepasst sein. So wäre es denkbar, die zukünftig ermittelte Fahrstrecke in einem kurvenreichen Gebiet länger zu wählen.

Die Informationen über die zukünftige Trajektorie des Fahrzeuges werden vorzugsweise ebenfalls mit den oben angegebenen Intervallen aktualisiert. Diese Informationen über die zukünftige Trajektorie sind daher vorzugsweise zu vorgegebenen diskreten Zeitpunkten in der Zukunft für einen vorgegebenen Zeitraum bzw. Zeithorizont bekannt.

Vorzugsweise erfolgt die Anpassung des Fahrparameters durch Anpassung eines vorgegebenen Arbeitspunktes. Aus dem Stand der Technik sind beispielsweise bei Tempomaten Regler bekannt, bei denen der Fahrer einen bestimmten Arbeitspunkt festsetzt. Dieser Arbeitspunkt wird unter Berücksichtigung der oben erwähnten Positionsdaten angepasst. Vorzugsweise wird der Arbeitspunkt in einem vorgegebenen Bereich, aufgrund der Kenntnisse der zukünftigen Trajektorie verändert. Der vorgegebne Bereich kann dabei durch vorgegebene Kenngrößen, wie etwa durch Geschwindigkeitsbegrenzungen bestimmt sein.

Üblicherweise weisen die Fahrzeuge Geschwindigkeitsregler, sowohl für den Fall einer Bewegung im ebenen Gelände und in der Steigung in Form eines konventionellen Tempomats, als auch im Gefälle in Form eines konventionellen Bremsomats auf. Dabei wird mit Hilfe aus dem Stand der Technik bekannter Technologie, beispielsweise über PID oder Zweipunktregler die Geschwindigkeit des Fahrzeuges um einen Arbeitspunkt geregelt, der von dem Fahrer gesetzt wird, sich durch eine einfache Schwelle oder aus der gesetzlichen Geschwindigkeitsbegrenzung ergibt.

Bevorzugt erfolgt die Anpassung des Fahrparameters auch unter Berücksichtigung von charakteristischen Kenngrößen des Fahrzeuges. Dabei sind diese charakteristischen Kenngrößen aus einer Gruppe von Kenngrößen ausgewählt, welche die Motorleistung, die momentane Geschwindigkeit des Fahrzeuges, den Abstand zu weiteren Fahrzeugen, die momentane Bremsleistung, den eingelegten Gang, die Fahrzeugmasse, Geschwindigkeitsbegrenzungen, zulässige Beschleunigungen, Kombinationen hieraus und dergleichen enthält.

Bei diesen Kenngrößen handelt es sich damit einerseits um solche Kenngrößen, die durch die Art des Fahrzeuges vorgegeben und im Folgenden auch als Stellgrößen bezeichnet werden, wie die Motorleistung, die Masse des Fahrzeuges und dergleichen. Andrerseits werden auch durch äußere Bedingungen bestimmte Kenngrößen berücksichtigt, wie Geschwindigkeitsbegrenzungen, zulässige maximale Beschleunigungen usw. Schließlich werden auch solche Kenngrößen berücksichtigt, die sich direkt aus der momentanen Fahrt des Fahrzeuges ergeben, wie die momentane Bremsleistung, der eingelegte Gang, die momentane Geschwindigkeit des Fahrzeuges, der Abstand zu weiteren Fahrzeugen und dergleichen. Bevorzugt werden auch Begrenzungen einzelner Stellgrößen berücksichtigt. Bei derartigen Begrenzungen kann es sich, wie oben gesagt, um gesetzliche Geschwindigkeitsbegrenzungen handeln, aber auch um Minimalgeschwindigkeiten, die nicht unterschritten werden sollten, um den fließenden Verkehr nicht zu behindern.

Vorzugsweise ist der Fahrparameter aus einer Gruppe von Eigenschaften ausgewählt, welche eine Soll-Geschwindigkeit des Fahrzeuges, einen Soll-Gang, eine Soll-Bremsleistung, einen Soll-Abstand zu weiteren Fahrzeugen und dergleichen enthält. So kann beispielsweise durch den Benutzer vorgegeben werden, dass das Fahrzeug möglichst energiesparend navigiert werden soll. Andererseits jedoch sind auch bei energiesparender Fahrweise Plausibilitätsaspekte zu berücksichtigen. So wäre es beispielsweise bei der oben erwähnten Anfahrt auf eine Bergkuppe nicht sinnvoll, die Motorleistung so zu regeln, dass das Fahrzeug mit äußerst geringer Geschwindigkeit die Bergkuppe erreicht und erst dann wieder langsam beschleunigt, da auf diese Weise Zeit verloren ginge und der Verkehr stark behindert werden würde. Damit kann mit dem erfindungsgemäßen Verfahren anstelle eines vorgegebenen Arbeitspunktes ein vorgegebener Arbeitsbereich festgelegt werden, wobei beispielsweise die untere Grenze durch eine noch vertretbare Mindestgeschwindigkeit gebildet wird.

Auch kann vom Fahrer vorab festgelegt werden, ob eher auf eine energiesparende Fahrweise oder auf eine schnelle Fahrweise geachtet werden soll. Im letzteren Fall wird der Arbeitsbereich zu höheren Geschwindigkeiten hin tendieren. Auch können unterschiedliche Fahraspekte unterschiedlich gewichtet werden was in dem erfindungsgemäßen Verfahren ebenfalls berücksichtigt wird

Auch ist es möglich, dass mit dem erfindungsgemäßen Verfahren ein jeweils für die Fahrbedingungen geeigneter Gang eingelegt wird.

Bei einem weiteren erfindungsgemäßen Verfahren werden die zukünftigen Positionsdaten aus einem Fahrtziel ermittelt. Dies bedeutet, dass die momentane Position des Fahrzeuges bestimmt wird und anhand eines bereits vorab eingegebenen Fahrziels ermittelt wird, welche Strecke zukünftig befahren wird. Aus dieser ermittelten Strecke können wieder die oben genannten Fahrzeugtrajektorien und die Eigenschaften der zukünftigen Fahrtstrecke ermittelt werden, wie der Radius der befahrenen Kurvenstrecke, die momentane Höhe der Fahrtstrecke, die Steigung und dergleichen.

Die vorliegende Erfindung ist ferner auf eine Steuerungsvorrichtung zur Steuerung von Fahrparametern eines Fahrzeuges gerichtet. Diese weist eine Positionsbestimmungseinrichtung auf, die eine Position des Fahrzeuges zu einem ersten vorgegebenen Zeitpunkt bestimmt und für diese Position erste charakteristische Daten ausgibt. Daneben ist eine Positionsermittlungseinrichtung vorgesehen, die aus den ersten charakteristischen Daten zukünftige Positionsdaten für einen bezüglich des ersten charakteristischen Zeitpunkts zukünftigen Zeitraum ermittelt. Ferner ist eine Regeleinrichtung vorgesehen, die in Reaktion auf die zukünftigen Positionsdaten wenigstens einen Fahrparameter des Fahrzeuges anpasst. Dabei berücksichtigt die Regeleinrichtung bei der Anpassung des Fahrparameters wenigstens eine Kenngröße.

Bei der Positionsbestimmungseinrichtung handelt es sich bevorzugt um eine Positionsbestimmungseinrichtung, die eine Vielzahl von Satellitenpositionssignalen aufnimmt und aus diesen Signalen die aktuelle Position des Fahrzeuges bestimmt.

Unter einer Positionsermittlungseinrichtung wird eine solche Einrichtung verstanden, die die Position des Fahrzeuges zu zukünftigen Zeitpunkten ermittelt. Dabei kann diese Positionsermittlungseinrichtung die zukünftige Position sowohl in Kenntnis eine vorbekannten Fahrziels ermitteln, als auch in Kenntnis zeitlich weiter zurückliegender Positionsdaten.

Bevorzugt weist die Steuerungsvorrichtung eine Speichereinrichtung auf, in der mögliche Trajektorien des Fahrzeuges abgelegt sind. Dabei handelt es sich bevorzugt um diejenigen Strecken, die von dem Fahrzeug in einem bestimmen Gebiet befahren werden können. Damit sind der Steuerungsvorrichtung die Positionsdaten im Wesentlichen aller befahrenen Strecken bekannt und auf diese Weise kann in Kenntnis einer aktuellen Position auf zukünftige Positionen geschlossen werden.

In einer weiteren bevorzugten Ausführungsform weist die Steuerungsvorrichtung einen Zeitgeber auf, der bewirkt, dass die zukünftigen Positionsdaten für eine vorgegebene Anzahl von Zeitintervallen bestimmt werden. So können beispielsweise ausgehend von einer Ist-Position in festen vorgegebenen Zeitintervallen die zugehörigen Positionsinformationen ausgegeben werden. Bevorzugt handelt es sich bei der Regeleinrichtung um einen modellbasierten prädiktiven Regler, bzw. bei dem Regelverfahren um ein modellbasiertes prädiktives Regelverfahren. Bei diesem Verfahren werden Begrenzungen in den einzelnen Stellgrößen und in den Ausgangsgrößen berücksichtigt. So kann beispielsweise eine maximale Motorleistung, das Gewicht des Fahrzeugs und dergleichen berücksichtigt werden.

Bevorzugt weist die Steuerungsvorrichtung eine Speichereinrichtung auf, in der ein Computerprogramm zur Durchführung eines Verfahrens der oben beschriebenen Art abgelegt ist. Dieses Computerprogramm weist vorzugsweise einen an sich aus dem Stand der Technik bekannten Algorithmus auf, der sowohl in der Zukunft liegende Daten, als auch Begrenzungen von Kenngrößen berücksichtigt.

Die vorliegende Erfindung ist ferner auf ein Fahrzeug mit einer Steuerungsvorrichtung der oben beschriebenen Art gerichtet. Besonders bevorzugt weist das Fahrzeug eine Geschwindigkeitsregelungseinrichtung, wie insbesondere aber nicht ausschließlich, einen Tempomaten oder dergleichen auf. In einer weiteren bevorzugten Ausführungsform weist das erfindungsgemäße Fahrzeug auch eine Abstandregelungseinrichtung auf, welche bewirkt, dass ein vorbestimmter Abstand zu vorausfahrenden Fahrzeugen eingehalten wird.

Die vorliegende Erfindung ist weiterhin auf ein Computerprogramm zur Durchführung eines Verfahrens der oben beschriebnen Art gerichtet.

Die Erfindung ist weiterhin auf die Verwendung eins modellbasierten prädiktiven Reglers und insbesondere eines so genannten "Multivariable Constrained Predictive Controllers" für ein Verfahren oder eine Vorrichtung der oben beschriebenen Art gerichtet. Genauer gesagt, kommt beispielsweise ein LQGPC - ("linear quadratic gaussian predictive control") oder ein GPC- ("gaussian predictive control") Verfahren in Betracht.

Derartige Regler bzw. Algorithmen sind für sich genommen aus dem Stand der Technik bekannt und bedürfen daher keiner eingehenden Beschreibung.

Weitere Vorteile und Ausführungsformen ergeben sich aus den beigefügten Zeichnungen. Darin zeigen:
- Fig. 1: eine Darstellung zu Veranschaulichung einer Trajektorienberechnung; und
- Fig. 2: ein Blockdiagramm zur Veranschaulichung des erfindungsgemäßen Verfahrens.

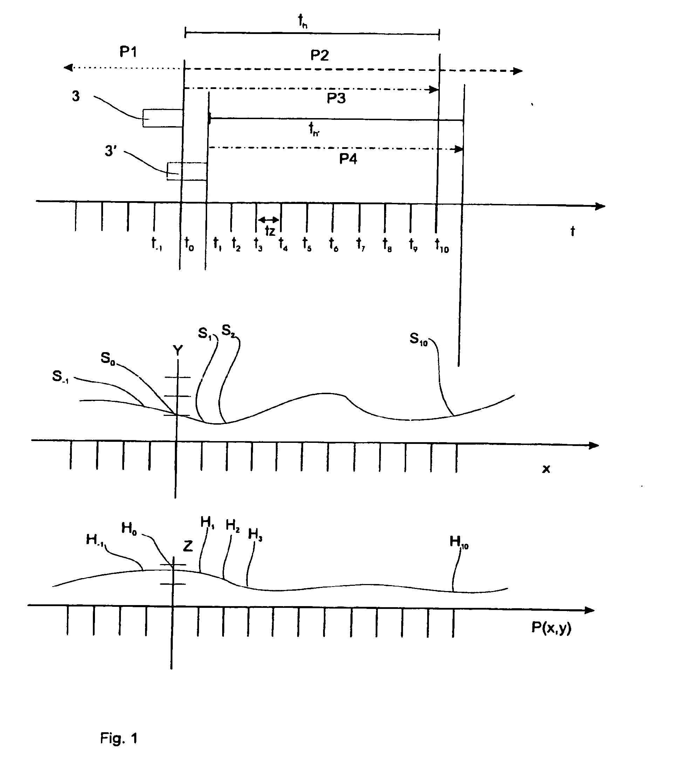

Figur 1 zeigt eine graphische Darstellung zur Veranschaulichung des erfindungsgemäßen Verfahrens. In dem oberen Teilbild ist ein Fahrzeug 3 zu unterschiedlichen Zeitpunkten gezeigt. Die mittlere Darstellung zeigt den Ort S des Fahrzeuges zu zur jeweiligen Zeit t und die untere Graphik zeigt eine Höhe H des Fahrzeugs zur Zeit t. Zu einem Zeitpunkt t₀ befindet sich das Fahrzeug an einem Ort S₀ und zu einem Zeitpunkt t₁ befindet sich das Fahrzeug 3 an einem Ort S₁, wobei die Lage dieses Ortes durch die Zeitspanne tz und die Geschwindigkeit des Fahrzeuges bestimmt wird. Damit zeigt der durch 3' gekennzeichnete Zustand des Fahrzeuges eine Zykluszeit tz nach t₀.

Zum Zeitpunkt t₀ wird in einem bestimmten durch den Pfeil P3 veranschaulichten Zeitraum tₕ eine vorgegebene Anzahl von zukünftigen Positionen des Fahrzeuges ermittelt. Dabei bleibt die Länge dieses im Folgenden als Horizont bezeichneten Bereichs tₕ konstant und umfasst immer n Werte der Trajektorie in der Zukunft. Im folgenden Fall werden jeweils zehn Werte ausgewertet. Es kann jedoch auch vorteilhaft sein, eine größere Anzahl von Werten für das erfindungsgemäße Verfahren zu verwenden.

Diese zukünftigen Positionsdaten sind bekannt, da beispielsweise das Fahrtziel bekannt ist. Auf diese Weise können nach vorheriger Ermittlung der Position S₀ zum Zeitpunkt t₀ die Positionen S₁, S₂ ... Sₙ zu den Zeitpunkten t₁, t₂, ... tₙ bestimmt werden. Eine weitere Möglichkeit, die zukünftigen Positionen S₁ ... Sn zu bestimmen, besteht darin, dass neben der Position S₀ auch eine Position S₋₁ bekannt ist, d. h. diejenige Position, die das Fahrzeug zum Zeitpunkt t₋₁ hatte. In Kenntnis dieses Punktes kann auf die Fahrrichtung geschlossen werden.

in ähnlicher Weise werden die jeweiligen Höhenwerte H₀, H₁ ... Hₙ bestimmt. Auch hier ist der Höhenwert H₀ zum Zeitpunkt t₀ bekannt. Dieser Höhenwert ergibt sich bei einer Ausführungsform beispielsweise aus den Positionsdaten zur Position S₀. Diese Position wird beispielsweise durch kartesische Koordinaten x, y bestimmt und über gespeicherte Kartensysteme diesen Positionsdaten ein bestimmter Höhenwert zugeordnet (z über x, y). Anstelle von kartesischen Koordinaten können jedoch auch andere Koordinatensysteme, wie Zylinderkoordinatensysteme, Kugelkoordinatensysteme und dergleichen verwendet werden. Damit ist durch die Ermittlung des Ortes S₀ auch gleichzeitig der Höhenwert H₀ bekannt. Anstelle eines Höhenwerts kann jedoch auch direkt ein Wert für die Steigung der Fahrtstrecke angegeben werden.

Wie oben werden auch entsprechende Höhenwerte H₁, H₂, H₃, ... Hₙ bestimmt, wobei diese Werte sich aus den ermittelten Positionsdaten S₁, S₂, S₃, ... Sn ergeben. Damit beruht die Bestimmung des Höhenwertes darauf, dass jedem Positionswert genau ein Höhenwert zugeordnet ist.

Aus den einzelnen Positionswerten S₁ ... Sₙ und H₁... Hₙ kann auf die Trajektorie geschlossen werden, d. h. aufgrund der Positionsdaten können die Krümmungsradien etwaiger Kurven, Steigungen und dergleichen berechnet werden. Aufgrund dieser Daten kann wiederum erfindungsgemäß der Fahrparameter angepasst werden.

Nach dem Zeitraum tz befindet sich das Fahrzeug an einer Position S₁ zum Zeitpunkt t₁ und einer Höhenposition H₁. Hier wird wieder der Horizont für die nächsten zehn zeitlichen Werte bestimmt, d. h. von t₂ bis tₙ₊₁. Auch werden wieder die jeweils zukünftigen Positions- und Höhenwerte S₂ ... Sₙ₊₁ bzw. H₂... Hₙ₊₁ zugeordnet und auf diese Weise wieder die zukünftige Trajektorie des Fahrzeuges bestimmt.

Damit kann der Horizont eine Zeit sein, für die man zukünftige Werte der Trajektorie kennt oder man kann den Horizont als Weg vor dem Fahrzeug verstehen, den das Fahrzeug in einer nahen Zukunft befahren wird.

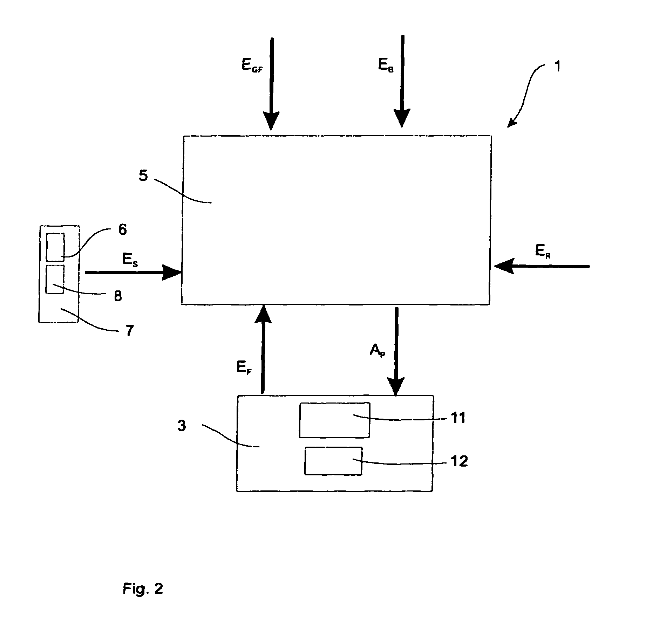

Figur 2 zeigt ein Blockdiagramm einer Vorrichtung 1 zur Durchführung des erfindungsgemäßen Verfahrens. Diese weist eine Regeleinrichtung 5 auf, in die eine Vielzahl von Eingangsinformationen E eingegeben wird und die eine Anweisung A für einen zu ändernden Fahrparameter ausgibt. Wie oben erwähnt, handelt es sich bei der Reglereinheit 5 um einen so genannten prädiktiven Geschwindigkeitsregler, der in die Dynamik des Fahrzeuges eingreift. Dabei wird ein Arbeitspunkt in einem gewissen Bereich, beispielsweise zwischen einer minimalen Geschwindigkeit und einer maximalen Geschwindigkeit, aufgrund der Kenntnisse der zukünftigen Fahrzeugtrajektorie verändert. Daneben kann auch der Zielabstand zu anderen Fahrzeugen vergrößert oder ein Gang eingelegt werden, der zu einem besseren Arbeitspunkt des Antriebs führt.

In der hier gezeigten Ausführungsform wird ein Regler, der Familie der so genannten modellbasierten prädiktiven Regler (MPC), eingesetzt. Im Unterschied zu aus dem Stand der Technik bekannten Verfahren berücksichtigt der Regel hier Begrenzungen in Ausgangs- oder Stellgrößen.

Konventionelle Regelungsmethoden können angewandt werden, wenn das Modell, in dem das Verfahren angewandt wird, exakt bekannt ist. Im vorliegenden Fall ist jedoch diese Bekanntheit nicht gewährleistet, da die Regelung von einer Vielzahl externer Größen, wie den oben erwähnten Geschwindigkeitsbegrenzungen, oder der zukünftigen Trajektorie bestimmt wird. Eine modellbasierte prädiktive Regelung ist eine Regelungssstrategie, die auf der Verwendung eines Modells basiert, um die Prozessausgänge über eine längere Zeitspanne vorherzusagen.

In der Regeleinrichtung 5 wird das so genannte Gütefunktional GF (Pfeil E_{GF}) eingegeben. Dabei steht in Figur 2 der Buchstabe E jeweils für eine Eingabe und der Buchstabe A für eine Ausgabe. Bei diesem Gütefunktional handelt es sich um das zu optimierende Funktional. Dieses Funktional beschreibt den optimalen stationären Betriebspunkt.

Daneben werden, wie durch den Pfeil E_{B} gezeigt, Beschränkungen eingegeben. Derartige Beschränkungen können sich beispielsweise aus Stellgrößen, wie der Motorleistung, aus zulässigen Beschleunigungen oder Regelgrößen, wie dem Geschwindigkeitslimit ergeben. Daneben wird, wie durch den Pfeil Eₛ veranschaulicht, das Streckenprofil berücksichtigt. Dieses Streckenprofil ergibt sich erfindungsgemäß, wie oben ausgeführt, aus den einzelnen für die Zukunft ermittelten Positionsdaten.

Optional kann, wie durch den Pfeil ER veranschaulicht, bei Vorhandensein eines adaptiven Abstandsreglers, Information über einen einzustellenden Soll-Abstand zu weiteren vorausfahrenden Fahrzeugen eingegeben werden. Dabei wird der Arbeitspunkt so angepasst, dass der vorab eingestellte Soll-Abstand zu einem vorausfahrenden Fahrzeug nicht unterschritten wird, sondern der Arbeitspunkt unter Berücksichtigung des ermittelten Trajektorienverlaufs optimiert wird. Dies kann beispielsweise durch Einlegung des optimalen Getriebegangs und die Wahl eines größeren Abstandes als so genannte dynamische Reserve erfolgen.

Als dynamische Reserve kommt dabei beispielsweise die potentielle Energie des Fahrzeuges in Betracht, die noch in kinetische Energie umgewandelt werden kann, indem zugelassen wird, dass das Fahrzeug bis zu einer vorgegebenen Geschwindigkeit weiter beschleunigt.

Daneben können bevorzugt, wie durch den Pfeil E_{F} veranschaulicht, Fahrbetriebsdaten des Fahrzeugs eingegeben werden, wie die Fahrzeugmasse, die Ist-Geschwindigkeit, der aktuell eingelegte Gang, die momentane Motorleistung, die momentane Bremsleistung, der momentane Soll-Abstand usw. So wird das Gütefunktional in die Optimierung eingebunden. Dieses Funktional beschreibt, wie oben erwähnt, den optimalen stationären Betriebspunkt. Die Optimierungsaufgabe und die Beschränkungen beschreiben den optimalen Weg zu dem optimalen stationären Arbeitspunkt.

Aus Kenntnis der zukünftigen Trajektorie wird zu jedem Zeitpunkt bzw. in jedem zeitlichen Intervall eine Folge der zukünftigen Stellgrößen über einen zeitlichen Horizont für den offenen Regelkreis in die Zukunft gerechnet. Dabei werden diese Steuergrößen so optimiert, dass das Gütefunktional in einem Prädiktionshorizont ein Minimum erreicht. Hieraus wiederum ergibt sich die Stellgröße zu einem vorgegebenen Zeitpunkt t. In einem weiteren Abtastschritt wird das zugrunde liegende Optimierungsproblem unter Einbeziehung der neuen Trajektorienpunkte und der sich tatsächlich ergebenden Regelabweichung neu gerechnet.

Das Ziel des Steueralgorithmusses ist die Berechnung einer Sequenz von optimalen Änderungen der Steuerungsvariablen innerhalb eines zeitlichen Horizonts insbesondere derart, dass die vorhergesagten Ausgangswerte so nah wie möglich an den internen Referenzwerten liegen. Diese Aufgabe wird in ein Optimierungsproblem übersetzt, wobei, wie oben erwähnt, die Gütefunktion der geänderten Werte minimiert wird, und die von außen eingegebenen Beschränkungen und begrenzenden Variablen berücksichtigt werden.

Das Bezugszeichen 7 bezieht sich auf eine Positionsermittlungseinrichtung, die die zukünftigen Positionsdaten an den Regler 5 weiterleitet. Diese Positionsermittlungseinrichtung 7 weist eine Positionsbestimmungseinrichtung 6 auf, die die aktuelle Position des Fahrzeuges, beispielsweise über Satellitenpositionssignale, erfasst. Daneben ist eine Speichereinrichtung 8 vorgesehen, in der bereits erfasste Positionen gespeichert werden können, idealerweise mit Zuordnung der jeweiligen Zeitpunkte, oder in virtuellen Landkarten und dergleichen abgelegt sein können. Das Bezugszeichen 11 bezieht sich auf eine Geschwindigkeitsregelungseinrichtung, die in dem Fahrzeug vorgesehen sein kann, wie beispielsweise ein Tempomat oder ein Bremsomat. Das Bezugszeichen 12 bezieht sich auf eine ebenfalls in dem Fahrzeug 3 angeordnete Abstandsregelungseinrichtung, die den Abstand, insbesondere zu vorausfahrenden Fahrzeugen kontrolliert. Die Daten bzw. die Begrenzungen, die von diesen Einrichtungen 11 und 12 ausgegeben werden, werden an die Regeleinrichtung weitergeleitet und ebenfalls bei der Ausgabe der Fahrparameter berücksichtigt.

Der Regeleinrichtung kennt, wie oben gesagt, zu jedem Zeitpunkt t das Trajektorienprofil für n Abtastschritte in der Zukunft, sowie das zu optimierende Gütefunktional und die dynamischen Eigenschaften der Regelstrecke. Letztere werden in einem geeigneten Modell dargestellt oder über einen geeigneten Schätzalgorithmus bestimmt. Als derartiger Algorithmus kommt beispielsweise ein sog. aus dem Stand der Technik bekannter Kalmannfilter in Betracht. Ein Kalmannfilter ist ein rekursiver Filter d.h., ein Filter, der einen oder mehrere seiner Ausgänge wieder als Eingang benutzt. Dieser Filter schätzt den Zustand eines dynamischen Systems aus einer Reihe unvollständiger und verrauschter Daten.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Steuerungsvorrichtung
- 3: Fahrzeug
- 5: Regeleinrichtung
- 6: Positionsbestimmungseinrichtung
- 8: Speichereinrichtung
- 11: Geschwindigkeitsregeleinrichtung
- 12: Abstandsregeleinrichtung
- A_{P}: Ausgabe des Fahrparameters
- tz: Zeitintervall
- E: Eingabe
- E_{B}: Eingabe der Beschränkungen
- E_{F}: Eingabe der Fahrbetriebsdaten
- E_{S}: Eingabe des Streckenprofils
- E_{GF}: Eingabe des Gütefunktionals
- ER: Eingabe des Soll - Abstands
- S₀, S₁, S₂, S₃... ,Sₙ: Positionsdaten
- H₀, H₁, H₂, H₃... ,Hₙ: Höhendaten
- t₀, t₁, t₂, t₃, ...,tₙ: Zeitpunkte
- tₕ: zukünftiger Zeitraum, Horizont
- tₕ.: weiterer zukünftiger Zeitraum, Horizont
- x, y: kartesische Koordinaten

## Patentansprüche

1. Verfahren zur Anpassung von Fahrparametern eines Fahrzeuges mit den Schritten:
- Ermittlung von Positionsdaten des Fahrzeugs zu einem ersten vorgegebenen Zeitpunkt tₒ;
- Ermittlung von zukünftigen Positionsdaten des Fahrzeugs für einen bezüglich dem ersten vorgegebenen Zeitpunkt zukünftigen Zeitraum tₕ;
- Anpassung wenigstens eines Fahrparameters unter Zugrundelegung der für den zukünftigen Zeitraum ermittelten Positionsdaten
**dadurch gekennzeichnet, dass** zur Anpassung des Fahrparameters zunächst eine Gütefunktionale (E_{GF}) zusammen mit Eingaben (E_{B}, E_{S}, E_{R}, E_{F}) in eine Regeleinrichtung (5) eingegeben wird und anschließend das Gütefunktional optimiert wird, um eine Anweisung (A_{P}) als Fahrparameter auszugeben.

2. Verfahren nach Anspruch 1,
**dadurch gekennzeichnet,dass**
die zukünftigen Positionsdaten des Fahrzeugs unter Berücksichtigung solcher Positionsdaten gewonnen werden, die vor dem ersten vorgegebenen Zeitpunkt t₀ ermittelt wurden.

3. Verfahren nach wenigstens einem der vorangegangenen Ansprüche,
**dadurch gekennzeichnet,dass**
die Positionsdaten jeweils nach im Wesentlichen konstanten Zeitintervallen tz ermittelt werden.

4. Verfahren nach wenigstens einem der vorangegangenen Ansprüche,
**dadurch gekennzeichnet, dass**
in einem weiteren Verfahrensschritt zukünftige Positionsdaten für einen weiteren zukünftigen Zeitraum tₕ, ermittelt werden.

5. Verfahren nach wenigstens einem der vorangegangenen Ansprüche,
**dadurch gekennzeichnet, dass**
der zukünftige Zeitraum tₕ sich aus der Summe einer vorgegebenen Vielzahl von Zeitintervallen tz zusammensetzt.

6. Verfahren nach wenigstens einem der vorangegangenen Ansprüche,
**dadurch gekennzeichnet, dass**
die Anpassung des Fahrparameters durch Anpassung eines vorgegebenen Arbeitspunktes erfolgt.

7. Verfahren nach wenigstens einem der vorangegangenen Ansprüche,
**dadurch gekennzeichnet, dass**
aus den zukünftigen Positionsdaten Eigenschaften einer zukünftigen Trajektorie des Fahrzeugs ermittelt werden, die aus einer Gruppe von Eigenschaften ausgewählt sind, welche den Radius der befahrenen Kurve, die momentane Höhe der Fahrstrecke, eine Steigung der Fahrstrecke und dergleichen enthält.

8. Verfahren nach wenigstens einem der vorangegangenen Ansprüche,
**dadurch gekennzeichnet, dass**
die Anpassung des Fahrparamters unter Berücksichtung von charakteristischen Kenngrößen erfolgt.

9. Verfahren nach Anspruch 8,
**dadurch gekennzeichnet, dass**
Begrenzungen wenigstens einer charakteristischen Kenngröße berücksichtigt werden.

10. Verfahren nach wenigstens einem der vorangegangenen Ansprüche 8 - 9,
**dadurch gekennzeichnet, dass**
die charakteristischen Kenngrößen aus einer Gruppe von Kenngrößen ausgewählt ist, welche die Motorleistung, die momentane Geschwindigkeit des Fahrzeugs, den Abstand zu weiteren Fahrzeugen, die momentane Bremsleistung, den eingelegten Gang, die Fahrzeugmasse, Geschwindigkeitsbegrenzungen, zulässige Beschleunigungen, Kombinationen hieraus und dergleichen enthält.

11. Verfahren nach wenigstens einem der vorangegangenen Ansprüche,
**dadurch gekennzeichnet, dass**
der Fahrparameter aus einer Gruppe von Eigenschaften ausgewählt ist, welche eine Soll-Geschwindigkeit, einen Soll-Gang, eine Soll-Bremsleistung, einen Soll-Abstand zu weiteren Fahrzeugen und dergleichen enthält.

12. Verfahren nach wenigstens einem der vorangegangenen Ansprüche,
**dadurch gekennzeichnet,dass**
die zukünftigen Positionsdaten aus einem Fahrtziel ermittelt werden.

13. Steuerungsvorrichtung (1) zur Steuerung von Fahrparametern eines Fahrzeugs (3) mit einer Positionsbestimmungseinrichtung (6), die eine Position des Fahrzeugs (3) zu einem ersten vorgegebenen Zeitpunkt t₀ bestimmt und für diese Position erste charakteristische Daten ausgibt, einer Positionsermittlungseinrichtung (7), die aus den ersten charakteristischen Daten zukünftige Positionsdaten für einen bezüglich des ersten charakteristischen Zeitpunkts tₒ zukünftigen Zeitraum tₕ ermittelt, einer Regeleinrichtung (5), die in Reaktion auf die zukünftigen Positionsdaten wenigstens einen Fahrparameter des Fahrzeugs anpasst, wobei die Regeleinrichtung (5) bei der Anpassung des Fahrparameters wenigstens eine Kenngröße berücksichtigt, **dadurch gekennzeichnet, dass** zur Steuerung der Fahrparameter des Fahrzeugs (3) in der Regeleinrichtung (5) eine Gütefunktionale (E_{GF}) und Eingaben (E_{B}, E_{S}, E_{R}, E_{F}) eingegeben sind, um das Gütefunktional zu optimieren und eine Ausgabe (A_{P}) als Fahrparameter auszugeben.

14. Steuerungsvorrichtung nach Anspruch 13,
**dadurch gekennzeichnet, dass**
diese eine Speichereinrichtung (8) aufweist, in der mögliche Trajektorien des Fahrzeugs abgelegt sind.

15. Steuerungsvorrichtung nach wenigstens einem der vorangegangenen Ansprüche 13 - 14,
**dadurch gekennzeichnet, dass**
die Regeleinrichtung (5) ein modellbasierter prädiktiver Regler ist.

16. Steuerungsvorrichtung nach wenigstens einem der vorangegangenen Ansprüche 13 - 15,
**dadurch gekennzeichnet, dass**
diese eine Speichereinrichtung aufweist, in der ein Computerprogramm zur Durchführung eines Verfahrens nach wenigstens einem der vorangegangenen Ansprüche 1 - 12 abgelegt ist.

17. Fahrzeug (3) mit einer Steuerungsvorrichtung nach wenigstens einem der vorangegangenen Ansprüche 13 -16.

18. Fahrzeug (3) nach Anspruch 17 mit einer Geschwindikeitsregelungseinrichtung (11).

19. Fahrzeug nach wenigstens einem der vorangegangenen Ansprüche 17 - 18 mit einer Abstandsregelungseinrichtung (12).

20. Computerprogramm zur Durchführung eines Verfahrens nach wenigstens einem der vorangegangenen Ansprüche 1 - 12.

21. Verwendung eines modellbasierten prädiktiven Reglers zur Durchführung eines Verfahrens nach wenigstens einem der vorangegangenen Ansprüche 1 - 12.

22. Verwendung eines modellbasierten prädiktiven Reglers für eine Steuerungsvorrichtung nach wenigstens einem der vorangegangenen Ansprüche 13 -16.

## Claims

1. Procedure for adapting vehicle driving parameters with the following steps:
- Calculation of vehicle position data at an initial specified point in time to;
- Calculation of future vehicle position data for a future time period tₕ with respect to the initial specified point in time;
- Adaptation of at least one driving parameter based on the position data calculated for the future time period
**characterised in that** a performance functional (E_{GF}) is initially entered in a control device (5) together with inputs (E_{B}, E_{S}, E_{R}, E_{F}) to adapt the driving parameter and that the performance functional is subsequently optimised to output an instruction (A_{P}) as the driving parameter.

2. Procedure in accordance with claim 1, **characterised in that** the future vehicle position data is generated taking into account position data that was calculated before the initial specified point in time to.

3. Procedure in accordance with at least one of the above claims, **characterised in that** the position data is calculated in each case in accordance with essentially constant time intervals tz.

4. Procedure in accordance with at least one of the above claims, **characterised in that** future position data for a further future time period tₕ is calculated in a further process step.

5. Procedure in accordance with at least one of the above claims, **characterised in that** the future time period tₕ comprises the total of a specified large number of time intervals tz.

6. Procedure in accordance with at least one of the above claims, **characterised in that** adaptation of the driving parameter takes place by adaptation of a specified working point.

7. Procedure in accordance with at least one of the above claims, **characterised in that** characteristics of a future vehicle trajectory are calculated from the future position data, whereby said characteristics are selected from a group of characteristics including the radius of the vehicle travel curve, the current route altitude, a route gradient and other similar characteristics.

8. Procedure in accordance with at least one of the above claims, **characterised in that** adaptation of the driving parameter takes place taking into account characteristic parameters.

9. Procedure in accordance with claim 8, **characterised in that** restrictions of at least one characteristic parameter are taken into account.

10. Procedure in accordance with at least one of the previous claims 8 - 9, **characterised in that** the characteristic parameters are selected from a group of parameters including the engine power, instantaneous vehicle speed, distance from other vehicles, instantaneous braking power, gear engaged, vehicle mass, speed restrictions, permissible acceleration, combinations of the above and other similar parameters.

11. Procedure in accordance with at least one of the above claims, **characterised in that** the driving parameter is selected from a group of characteristics including a target speed, target gear, target braking power, target distance from other vehicles and other similar characteristics.

12. Procedure in accordance with at least one of the above claims, **characterised in that** the future position data is calculated based on a destination.

13. Control device (1) for controlling driving parameters of a vehicle (3) with a position determination device (6) that determines a position of the vehicle (3) at an initial specified point in time to and outputs initial characteristic data for this position, a position calculation device (7) that calculates future position data for a future time period tₕ with respect to the first characteristic point in time to from the initial characteristic data, a controller (5) that adapts at least one vehicle driving parameter in response to the future position data, whereby the controller (5) takes into account at least one parameter when adapting the driving parameter, **characterised in that** a performance functional (E_{GF}) and inputs (E_{B}, E_{S}, E_{R}, E_{F}) are entered in the controller (5) to control the driving parameters of the vehicle (3) in order to optimise the performance functional and to generate an output (A_{P}) as a driving parameter.

14. Control device in accordance with claim 13, **characterised in that** this device features a memory device (8) in which possible vehicle trajectories are stored.

15. Control device in accordance with at least one of the previous claims 13 - 14, **characterised in that** the control device (5) is a model-based predictive controller.

16. Control device in accordance with at least one of the previous claims 13 -15, **characterised in that** this device features a memory device in which a computer program is stored for carrying out a procedure in accordance with at least one of the previous claims 1 -12.

17. Vehicle (3) with a control device in accordance with at least one of the previous claims 13- 16.

18. Vehicle (3) in accordance with claim 17 with a cruise control (11).

19. Vehicle in accordance with at least one of the previous claims 17 - 18 with an adaptive cruise control (12).

20. Computer program for carrying out a procedure in accordance with at least one of the previous claims 1 - 12.

21. Use of a model-based predictive controller for carrying out a procedure in accordance with at least one of the previous claims 1 - 12.

22. Use of a model-based predictive controller for a control device in accordance with at least one of the previous claims 13 - 16.

## Revendications

1. Procédé d'adaptation des paramètres de conduite d'un véhicule à l'aide des étapes :
- Détermination de données de position du véhicule par rapport à un premier moment to spécifié ;
- Détermination de données de position futures du véhicule pour une période future tₙ en référence au premier moment spécifié ;
- Adaptation d'au moins un paramètre de conduite en prenant pour base les données de position déterminées pour la période future
**caractérisé en ce que**, pour adapter le paramètre de conduite, il convient de saisir tout d'abord une fonction de qualité (E_{GF}) en combinaison avec des informations (E_{B}, E_{S}, E_{R}, E_{F}) dans un dispositif de réglage, puis la fonction de qualité est optimisée pour émettre une instruction (A_{P}) comme paramètre de conduite.

2. Procédé selon la revendication 1,
**caractérisé en ce que**
les données de position futures du véhicule sont obtenues en prenant en considération de telles données de position qui ont été déterminées avant le premier moment tₒ spécifié.

3. Procédé selon au moins une des revendications mentionnées précédemment,
**caractérisé en ce que**
les données de position sont à chaque fois déterminées en fonction d'intervalles de temps t_{z} essentiellement constants.

4. Procédé selon au moins une des revendications mentionnées précédemment,
**caractérisé en ce que**
au cours d'une étape de procédé suivante, les données de position futures sont déterminées pour une période future suivante tₙ.

5. Procédé selon au moins une des revendications mentionnées précédemment,
**caractérisé en ce que**
la période future tₙ se compose de la somme d'une multitude spécifiée d'intervalles de temps t_{z}.

6. Procédé selon au moins une des revendications mentionnées précédemment,
**caractérisé en ce que**
l'adaptation du paramètre de conduite a lieu par l'adaptation d'un point de travail spécifié.

7. Procédé selon au moins une des revendications mentionnées précédemment,
**caractérisé en ce que**
à partir des données de position futures sont déterminées des propriétés d'une trajectoire future du véhicule qui sont sélectionnées à partir d'un groupe de propriétés qui contient le rayon du virage parcouru, l'altitude momentanée du trajet, une côte du trajet et d'autres informations similaires.

8. Procédé selon au moins une des revendications mentionnées précédemment,
**caractérisé en ce que**
l'adaptation du paramètre de conduite a lieu en prenant en considération des valeurs de référence caractéristiques.

9. Procédé selon la revendication 8,
**caractérisé en ce que**
des limitations d'au moins une valeur de référence caractéristique sont prises en considération.

10. Procédé selon au moins une des revendications 8 et/ou 9 mentionnées précédemment,
**caractérisé en ce que**
les valeurs de référence caractéristiques sont sélectionnées à partir d'un groupe de valeurs de référence qui contient la puissance moteur, la vitesse momentanée du véhicule, la distance de sécurité par rapport à d'autres véhicules, la puissance de freinage momentanée, le rapport engagé, la masse du véhicule, les limitations de vitesse, les accélérations admissibles, les combinaisons de ces valeurs et des informations similaires.

11. Procédé selon au moins une des revendications mentionnées précédemment,
**caractérisé en ce que**
le paramètre de conduite est sélectionné à partir d'un groupe de propriétés qui contient une vitesse de consigne, un rapport de consigne, une puissance de freinage de consigne, une distance de sécurité de consigne par rapport à d'autres véhicules et des informations similaires.

12. Procédé selon au moins une des revendications mentionnées précédemment,
**caractérisé en ce que**
les données de position futures sont déterminées à partir d'une destination.

13. Dispositif de commande (1) pour commander des paramètres de conduite d'un véhicule (3) avec un système de détermination de la position (6), qui détermine une position du véhicule (3) par rapport à un premier moment tₒ spécifié et émet des premières données caractéristiques pour cette position, un dispositif de calcul de la position (7) qui calcule les données de position futures à partir des premières données caractéristiques pour une période future tₙ en référence au premier moment caractéristique tₒ, un dispositif de réglage (5) qui adapte au moins un paramètre de conduite du véhicule en réaction aux données de position futures, le dispositif de réglage (5) prenant en considération au moins une valeur de référence lors de l'adaptation du paramètre de conduite, **caractérisé en ce que**, pour commander les paramètres de conduite du véhicule (3) dans le dispositif de réglage, une fonction de qualité (E_{GF}) et des informations (E_{B}, E_{S}, E_{R}, E_{F}) sont saisies pour optimiser la fonction de qualité et émettre une information (A_{P}) comme paramètre de conduite.

14. Dispositif de commande selon la revendication 13,
**caractérisé en ce que**
celui-ci présente un dispositif d'enregistrement (8) dans lequel sont mémorisées des trajectoires possibles du véhicule.

15. Dispositif de commande selon au moins une des revendications 13 et/ou 14 mentionnées précédemment,
**caractérisé en ce que**
le dispositif de réglage (5) est un système de réglage à prédiction basé sur des modèles.

16. Dispositif de commande selon au moins une des revendications 13 à 15 mentionnées précédemment,
**caractérisé en ce que**
celui-ci présente un dispositif d'enregistrement dans lequel est enregistré un programme d'ordinateur pour réaliser un procédé selon au moins une des revendications 1 à 12 mentionnées précédemment.

17. Véhicule (3) avec un dispositif de commande selon une des revendications 13 à 16 mentionnées précédemment.

18. Véhicule (3) selon la revendication 17 avec un dispositif de régulation de la vitesse (11).

19. Véhicule selon au moins une des revendications 17 et/ou 18 mentionnées précédemment avec un dispositif de régulation de la distance de sécurité (12).

20. Programme d'ordinateur pour réaliser un procédé selon au moins une des revendications 1 à 12 mentionnées précédemment.

21. Utilisation d'un système de réglage à prédiction basé sur des modèles pour réaliser un procédé selon au moins une des revendications 1 à 12 mentionnées précédemment.

22. Utilisation d'un système de réglage à prédiction basé sur des modèles pour un dispositif de commande selon au moins une des revendications 13 à 16 mentionnées précédemment.
